# EUROPÄISCHE PATENTSCHRIFT

(11) **EP 3 854 770 B1**
(45) Veröffentlichungstag und Bekanntmachung des Hinweises auf die Patenterteilung: **24.01.2024**
(21) Anmeldenummer: 20152963.3
(22) Anmeldetag: 21.01.2020
(51) Int. Cl.: C05F 17/10, C05F 17/20

(54) **VERFAHREN ZUR HERSTELLUNG EINES BODENSUBSTRATS UND VERFAHREN ZUM EINBRINGEN DES BODENSUBSTRATS**
METHOD OF MANUFACTURING A SOIL SUBSTRATE AND METHOD OF INTRODUCING THE SOIL SUBSTRATE
PROCÉDÉ DE FABRICATION DE SUBSTRAT DE SOLS ET PROCÉDÉ D'APPLICATION DU SUBSTRAT DE SOLS

(43) Veröffentlichungstag der Anmeldung: 28.07.2021
(73) Patentinhaber: Aumann, Franz, 49661 Cloppenburg (DE)
(72) Erfinder: Aumann, Franz, 49661 Cloppenburg (DE)
(74) Vertreter: Siekmann, Gunnar

(56) Entgegenhaltungen:
- EP-A1- 2 188 230
- CH-A1- 713 589
- DE-A1-102014 119 248
- US-A1- 2017 096 375

## Beschreibung

Die Erfindung betrifft ein Verfahren zur Herstellung eines Bodensubstrats zur Düngung und Bodenverbesserung, insbesondere im Wurzelbereich von Bäumen, bei dem in einer wässrigen Lösung unter Zugabe eines Fermentationsaktivators lebende Mikroorganismen aktiviert werden und bei dem die wässrige Lösung mit den aktivierten Mikroorganismen, leicht zersetzbarer Biomasse und zerkleinertem pyrogenen Kohlenstoff zu einem Gemisch vermischt und anschließend fermentiert werden. Zudem wird ein Verfahren zum Einbringen des Bodensubstrats in einen Boden beansprucht.

Insbesondere in urbanen Regionen finden sich für Bäume nur selten günstige, wachstumsfördernde Standorte. Stattdessen liegen häufig einer oder mehrere Stressfaktoren, beispielsweise Wassermangel, Staunässe, Streusalz, Luftmangel, Bodenverdichtung, Nährstoffmangel im Boden oder ein beengter Wurzelraum vor. Alle diese Stressfaktoren sind nachteilig für das Wachstum des jeweiligen Baumes und wirken sich negativ sowie möglicherweise krankheitsfördernd auf den Baum aus. Wenn ein Baum unter diesen Bedingungen die nachteiligen Stressfaktoren nicht mehr kompensieren kann, führt dies zumeist zu einem frühzeitigen Absterben des Baumes.

Dem frühzeitigen Absterben der Bäume, insbesondere in urbanen Regionen, wird teilweise durch Düngung und Bodenverbesserung entgegengewirkt, wobei durch Düngemittel zumeist nur eine kurzzeitige bzw. zeitlich begrenzte Verbesserung erzielt wird. Ähnliche Probleme bestehen zudem auf Plantagen, auf denen zumeist großflächig eine bestimmte Baumart gepflanzt ist. Hinzu kommt, dass die Düngemittel zumeist nur unzureichend in den Boden eindringen.

Ein solches Düngemittel, welches ebenso mittels Fermentation aus Reststoffen an Biomasse, wie beispielsweise Gärresten, Feststoffen von Gülle oder aus Mist, gewonnen wird, geht aus der DE 10 2014 119 248 A1 hervor. Dieses vollständig biologische Düngemittel kann als Bodensubstrat oberflächig in Böden eingearbeitet werden oder auch als nährstoffreicher Bodenersatz verwendet werden, um eine verbesserte Humusschicht und ein aktiveres Bodenleben aufzubauen. Während das oberflächige Einarbeiten jedoch nur zu einer unzureichenden Verbesserung für tiefere Baumwurzeln führt, sind bei der Verwendung als Bodenersatz umfangreichere Erdarbeiten nötig, die ihrerseits zu einer Schädigung der Baumwurzeln und damit einer Schädigung des Baumes führen. Die US2017096375 offenbart ein Verfahren zum Einbringen poröser kohlenstoffhaltiger Partikel im Wurzelbereich von Bäumen. EP2188230 beschreibt ein Verfahren zur Herstellung nährstoffreicher Tonerdesubstrate durch Vermischen von Biomasse und pyrogenem Kohlenstoff. CH713589 offenbart ein Bodensubstrat für den Wurzelraum einer Pflanze, umfassen Komposterde und ein Granit-Schotter-Kies-Gemisch.

Aufgabe der Erfindung ist es, ein vollständig biologisches Bodensubstrat bereitzustellen, mit dem Nachteile durch derartige Standortbedingungen verbessert oder ausgeglichen werden können.

Die Lösung dieser Aufgabe erfolgt mit einem Verfahren zur Herstellung eines Bodensubstrats nach Anspruch 1 und einem Verfahren zum Einbringen des Bodensubstrats in einen Boden gemäß den Merkmalen des Anspruchs 11. Weiterbildungen und vorteilhafte Ausgestaltungen sind in den jeweils nachgeordneten Ansprüchen angegeben.

Das Bodensubstrat zur Düngung und Bodenverbesserung, insbesondere im Wurzelbereich von Bäumen, aufweisend ein Gemisch aus durch Fermentation zersetzter organischer Biomasse, zerkleinertem pyrogenen Kohlenstoff und lebenden Mikroorganismen, zeichnet sich dadurch aus, dass das Gemisch einen Trockenmassegehalt von wenigstens 90 %, insbesondere wenigstens 95 % aufweist, und dass alle Bestandteile des Gemisches eine Korngröße von 0,2 mm unterschreiten.

Die Bestandteile des Bodensubstrats weisen dann, abgesehen von sich bildenden Staub und Bruchstücken, eine möglichst gleichmäßige Korngröße auf, die eine einfache Dosierung und Verarbeitbarkeit des Bodensubstrats, beispielsweise beim Einarbeiten in einen Boden, gewährleistet. In dem Boden führen die lebenden Mikroorganismen dann zu einer allgemeinen Aktivierung des Bodenlebens. Zudem kann das Bodensubstrat aufgrund des hohen Trockenmassegehalts bei luftdichter Verpackung lange gelagert werden.

Die Korngröße der Bestandteile des Bodensubstrats beträgt dabei nach einer Weiterbildung weniger als 0,2 mm, insbesondere weniger als 0,1 mm. Mit dieser Korngröße kann das Bodensubstrat auf einfache Weise pneumatisch gefördert werden, insbesondere auch durch Injektionslanzen oder ähnlichem hindurch gefördert werden, welche geringe Innendurchmesser aufweisen.

Als Ausgangsmaterial für zu zersetzende Biomasse eignen sich beispielsweise pflanzliche Stoffe aus der Landwirtschaft, tierische Nebenprodukte gemäß Kategorie 2 nach VO (EG) 1069/2009, insbesondere ausgepresste Gärreste, Feststoffe aus Gülle, Mist, Klärschlamm oder Einstreu aus Tierhaltung. Die tierischen Nebenprodukte können so noch veredelt werden und müssen nicht mehr auf, vor allem in Gebieten mit intensiver Tierhaltung, knappen Anbauflächen ausgebracht werden. Der pyrogene Kohlenstoff kann in dem Bodensubstrat durch Pyrolysekohle, auch als Pflanzenkohle bezeichnet, gebildet sein. An dem Kohlenstoff werden unter anderem Nährstoffe gebunden und auch lebende Mikroorganismen können schon während der Fermentation auf dem Kohlenstoff siedeln.

Um Eigenschaften des Bodensubstrats an unterschiedliche Verwendungen anpassen zu können, kann das Gemisch als weiteren Bestandteil wenigstens einen der nachfolgend aufgeführten Zusatzstoffe Gesteinsmehl, Lava, Mykorrhiza, effektive Mikroorganismen, roter Kleeblütenextrakt, Huminsäure oder Chlorella-Algen aufweisen. Diese Zusatzstoffe erfüllen jeweils unterschiedliche Funktionen in dem Bodensubstrat.

Während Mykorrhiza-Pilze, effektive Mikroorganismen und Chlorella-Algen die schon die bei der Fermentation eingebrachten lebenden Mikroorganismen ergänzen und aktive Bodenlebewesen darstellen, führen Gesteinsmehl und Lava neben einer verbesserten Nährstoffgrundlage für Pflanzen und Mikroorganismen vor allem auch zu einer Strukturverbesserung des Bodensubstrates selbst. Die Lava kann dabei in einer bevorzugten Ausführung einen Anteil von bis zu 15 %, insbesondere bis zu 10 %, insbesondere bis zu 5 %, des Bodensubstrats ausmachen. Weiter weisen die Lava oder das Gesteinsmehl bevorzugt eine Korngöße von 0,5 mm bis 1 mm auf.

Weitere Nährstoffe können über den roten Kleeblütenextrakt und die Huminsäure in den Boden eingebracht werden, um eine Bodenverbesserung zu erzielen. Bevorzugt werden sowohl der rote Kleeblütenextrakt als auch die Huminsäure in einer Konzentration von jeweils bis zu 1 % dem Bodensubstrat beigemengt, d.h. bis zu 10 l roter Kleeblütenextrakt und/oder bis zu 10 l Huminsäure auf 1000 l des Bodensubstrats. Insbesondere werden genau 10 l roter Kleeblütenextrakt und/oder 10 l Huminsäure auf 1000 l des Bodensubstrats beigemengt.

Wie groß die jeweiligen Anteile der Zusatzstoffe in dem Bodensubstrat sind und in welcher Zusammensetzung die Zusatzstoffe in dem Bodensubstrat enthalten sind, ist abhängig von dem jeweiligen Standort und den an dem Standort wachsenden Pflanzen bzw. Bäumen. So brauchen Laubbäume beispielsweise eine andere Nährstoffzusammensetzung des Bodensubstrats als Nadelbäume. Gegebenenfalls kann auch eine Voruntersuchung des Bodens erfolgen, bevor das Bodensubstrat in diesen eingearbeitet wird.

Um den Fermentationsprozess bei der Herstellung zu optimieren, können in dem Bodensubstrat ferner noch Zeolithpulver und Keramik enthalten sein. Die Keramik dient dann in dem fertigen Bodensubstrat unter anderem als Trägermaterial für die lebenden Mikroorganismen, welche gemäß einer bevorzugten Ausgestaltung der Erfindung zusammen in einer wässrigen Lösung mit der Biomasse und dem pyrogenen Kohlenstoff vermischt werden. Zusätzlich kann Keramik in dem Bodensubstrat ebenso wie Gesteinsmehl und Lava bestimmte Nährstoffe zur Verbesserung des Bodenklimas bereitstellen. Ausgangsbasis für die Keramik kann gemäß einer bevorzugten Ausführung Tonmineral sein, insbesondere in einer Zusammensetzung aus Quarz und Aluminiumoxid, insbesondere in einem Verhältnis von 80 % Quarz und 20 % Aluminiumoxid.

Das Zeolithpulver kann gemäß einer bevorzugten Ausführung Klinoptilolith aus der Stoffgruppe der Zeolithe sein. Dies ist ein wasserhaltiges Alumosilikat mit Calcium, Kalium bzw. Natrium als verbindende Kationen. Zeolithpulver weist eine große spezifische Oberfläche auf und eignet sich besonders um Feuchtigkeit und Nährstoffe zu speichern. Das Zeolithpulver kann daher einen Teil des pyrogenen Kohlenstoffs in dem Bodensubstrat ersetzen oder zusätzlich beigemengt werden. Dies ist besonders interessant, da pyrogener Kohlenstoff zum Teil erheblichen Preisschwankungen unterliegt und mit dem Zeolithpulver so eine Kostenoptimierung erfolgen kann.

Gemäß einer ersten bevorzugten Zusammensetzung weist das fertige Bodensubstrat ausgehend von einem nach der Fermentation vorliegenden organisch-mineralischen Dünger mit vorzugsweise:
- 57 % pflanzlichen Stoffen aus der Landwirtschaft
- 0,5 % Gesamtstickstoff (N)
- 0,9 % Gesamtphosphat (P2O6)
- 0,7 % Gesamtkaliumoxid (K2O)
- 17 % Organische Substanz, bewertet als Glühverlust
- 1,9 % Basisch wirksame Bestandteile (bewertet als CaO)
- 0,3 % Schwefel (S)
- 0,6 % Gesamtmagnesiumoxid (MgO)
folgende Bestandteile je 1000 Liter auf:
- 1 % roter Kleeblütenextrakt
- 1 % Chlorella Algen
- 5 % Pflanzenkohle gemäß EBC
- 5 % Lava
- 0,01 % Mykorhizzapilze Endosporen mit mehr als 55 Millionen Propagules pro 1 Liter

Gemäß einer zweiten bevorzugten Zusammensetzung weist das Bodensubstrat ausgehend von dem gleichen organisch-mineralischen Dünger folgende Bestandteile auf:
- 0,5 % roter Kleeblütenextrakt
- 0,5 % Chlorella Algen
- 0,5 % Huminsäuren
- 2 % Lava
- 1 % Pflanzenkohle gemäß EBC
- 0,01 % Mykorrhizapilze Endosporen mit mehr als 55 Millionen Propagules pro 1 Liter

Das Verfahren zur Herstellung des Bodensubstrats zur Düngung und Bodenverbesserung, insbesondere im Wurzelbereich von Bäumen, bei dem in einer wässrigen Lösung unter Zugabe eines Fermentationsaktivators lebende Mikroorganismen aktiviert werden, bei dem die wässrige Lösung mit den aktivierten Mikroorganismen, leicht zersetzbare organische Biomasse und zerkleinerter pyrogener Kohlenstoff zu einem Gemisch vermischt werden und bei dem sich an das Vermischen eine Fermentation des Gemisches anschließt, wobei das Gemisch für wenigstens einen Tag eine Temperatur von mehr als 60 °C aufweist, zeichnet sich erfindungsgemäß dadurch aus, dass das Gemisch im Anschluss an die Fermentation schonend bei Temperaturen zwischen 40 °C und 50 °C getrocknet wird, dass das Gemisch so lange getrocknet wird, bis dieses einen Trockenmassegehalt von wenigstens 90 %, insbesondere wenigstens 95 % aufweist, und dass das getrocknete Gemisch vermahlen wird, bis dieses eine Korngröße von weniger als 0,2 mm aufweist.

Das nach der Fermentation erhaltene Terra Preta ähnliche Produkt, welches sich bereits als oberflächig in den Boden einzuarbeitender Dünger eignet, wird durch die nachfolgenden Bearbeitungsschritte derart aufbereitet, dass das erfindungsgemäß hergestellte Bodensubstrat vielseitiger eingesetzt und verwendet werden kann. Eine solche Verwendung betrifft unter anderem das Einarbeiten des Bodensubstrats auch in tiefere Bodenschichten, beispielsweise mittels Druckluft, um speziell das Wachstum von Bäumen und deren Wurzeln zu verbessern und eine Tiefenlockerung des Bodens zu erreichen. Die nach dem Vermahlen erhaltene, abgesehen von sich bildendem Staub und Bruchstücken, möglichst gleichmäßige Korngröße des Gemisches ermöglicht durch das dann pneumatisch förderbare Gemisch eine entsprechend schonende Verwendung, die einen minimalen Eingriff in den Boden bedeutet.

Eine gleichmäßige Korngröße der Bestandteile des Bodensubstrats ermöglicht zudem eine einfache und genaue Dosierung des Bodensubstrats. Gemäß einer bevorzugten Ausgestaltung der Erfindung wird das Gemisch daher so klein vermahlen, dass dessen Bestandteile eine Korngröße von weniger als 0,2 mm, insbesondere weniger als ca. 0,1 mm, aufweisen. Das Bodensubstrat kann so auch durch Leitungen mit geringem Innendurchmesser gefördert werden, insbesondere pneumatisch gefördert werden.

Die schonende Trocknung des Gemisches gewährleistet, dass die vor der Fermentation zugegebenen Mikroorganismen die Trocknung des Gemisches auf einen Feuchtegehalt von weniger als 10 % überleben, insbesondere auf einem Feuchtegehalt von weniger als 5 % überleben. Während der Trocknung des Gemisches wird das Gemisch daher nur auf Temperaturen zwischen 40 °C und 50 °C erwärmt.

Das fertig fermentierte Gemisch weist vor der Trocknung noch einen Trockenmassegehalt von ca. 30 % auf. Die geringen Temperaturen von maximal 50 °C erfordern somit, dass das Gemisch über einen Zeitraum von wenigstens vier Wochen getrocknet wird, um die Feuchtigkeit zu entziehen.

Während der Trocknung wird das Gemisch gemäß einer bevorzugten Ausgestaltung der Erfindung in sogenannten Big Bags gelagert. Jeder Big Bag kann vorteilhafterweise ein Fassungsvermögen von 500 l aufweisen und ist auf einfache Weise mit einem Gabelstapler, Frontlader oder Radlader handhabbar. Die gefüllten Big Bags werden dann in spezielle Container gebracht, denen eine für die Trocknung des Gemisches benötigte Belüftungseinrichtung und Heizungseinrichtung zugeordnet ist. An Stelle von Big Bags eignen sich zu diesem Zweck auch andere Behältnisse, die eine entsprechende Belüftung ermöglichen und eine entsprechende Größe aufweisen.

Um eine ausreichende Belüftung und gleichmäßige Trocknung des Gemisches während des Trocknungsvorgangs zu gewährleisten, kann das Gemisch während des Trocknens zudem wenigstens einmal pro Woche durchmischt oder gerührt werden. Beim wöchentlichen Durchmischen oder Rühren werden dann unterschiedlich trockene und feuchte Bereiche innerhalb eines Behältnisses ausgeglichen.

Alternativ zu einer Trocknung in Big Bags oder anderen Behältnissen in Containern kann das fermentierte Gemisch unter anderem auch mittels eines Bandtrockners auf den Trockenmassegehalt von 10 %, insbesondere 5 %, getrocknet werden. Um zu hohe Temperaturen während des Trocknens mittels Bandtrockner zu vermeiden ist hier jedoch in besonderem Maße auf die im Gemisch erreichten Temperaturen, die höchstens 50 °C betragen sollen, zu achten und es sind gegebenenfalls entsprechende Maßnahmen zur Kontrolle der Temperaturen vorzunehmen.

Um einen optimalen Trocknungsprozess sicherstellen zu können, kann nach einer Weiterbildung vorgesehen sein, dass das fertig fermentierte Gemisch vor dem Trocknen granuliert wird. Das granulierte Gemisch weist eine einheitliche Struktur auf, welche einfacher als das fermentierte Gemisch während der Trocknung durchmischt und gerührt werden kann. Zudem weist das Granulat eine Struktur auf, die aufgrund größerer Zwischenräume zwischen einzelnen Körnern des Granulats besser durchlüftet werden kann als ein nicht granuliertes Gemisch.

Da das getrocknete und vermahlene Gemisch aufgrund des hohen Trockenmassegehalts und einer großen Oberfläche stark hygroskopisch ist, muss das fertige Bodensubstrat luftdicht verpackt werden, um dessen Eigenschaften auch bei längerer Lagerung zu erhalten. Nach einer Weiterbildung der Erfindung erfolgt daher nach dem Bearbeitungsschritt des Vermahlens noch ein weiterer Bearbeitungsschritt, bei dem das getrocknete und vermahlene Gemisch luftdicht verpackt wird.

Durch die Zusammensetzung der Bestandteile des Gemisches bei der Fermentation und Reaktionen zwischen den einzelnen Bestandteilen des Gemisches werden bei der Fermentation in dem Gemisch hohe Temperaturen von über 60 °C erreicht. Diese Temperaturen von über 60 °C werden vorteilhafterweise über einen Zeitraum von fünf bis zehn Tagen in dem Gemisch gehalten. Die hohen Temperaturen stellen dabei sicher, dass eine Hygienisierung der zum Teil belasteten Biomasse erfolgt, insbesondere wenn die Biomasse Klärschlamm, Gärreste oder andere tierische Reststoffe, die mit Fäkalien belastet sind, enthält. Die belastete Biomasse wird in der Fermentation durch Mineralisierung der organischen Substanz unter anderem in wertvolle Nährstoffe für Pflanzen und Bodenlebewesen umgesetzt.

Die Fermentation erfolgt vorteilhafterweise in einer Miete auf einer Freifläche, um nach einem Abkühlen des Gemisches ein Eindringen von Bodenlebewesen, wie beispielsweise Kompostwürmern, zu ermöglichen. In die Miete eingetretene Bodenlebewesen führen zu einer weiteren Zersetzung der Biomasse und zu einer Auflockerung des Gemisches, wobei ergänzend auch eine teilweise Kompostierung des Gemisches erfolgen kann.

Um die für die Hygienisierung benötigten hohen Temperaturen von über 60 °C in dem gesamten Gemisch, insbesondere in der gesamten Miete, sicherzustellen, ist nach einer Weiterbildung vorgesehen, dass das Gemisch für die Dauer der Fermentation in der Miete mit einer Folie abgedeckt wird. Durch die Folie, wird einerseits die bei der Fermentation entstehende Wärme auch in Randbereichen in der Miete erreicht und gehalten und andererseits kann durch Sonneneinstrahlung weitere Wärmeenergie aufgenommen werden. Die Folie ist dazu in weiterer Ausgestaltung bevorzugt eine dunkle Kunststoffplane. Weiterhin kann das Gemisch für die Dauer der Fermentation auch anderweitig abgedeckt werden, beispielsweise mit Platten oder anderen geeigneten Mitteln.

Die Aktivierung der Mikroorganismen erfolgt vorteilhafterweise in einem der Fermentation vorgelagerten Arbeitsschritt, wobei die Mikroorganismen für wenigstens sieben Tage, insbesondere genau sieben Tage, in der wässrigen Lösung aktiviert werden. Nach diesem Aktivierungsschritt wird die wässrige Lösung mit der leicht zersetzbaren Biomasse und dem zerkleinerten pyrogenen Kohlenstoff vermischt. Das Vermischen mit der Biomasse und dem zerkleinerten pyrogenen Kohlenstoff kann dabei bevorzugt erfolgen, indem die wässrige Lösung beim Aufschichten der Miete mit den anderen Bestandteilen des Gemisches vermengt wird oder indem die wässrige Lösung auf der aufgeschichteten Miete fein verteilt zerstäubt wird.

Um eine optimale Aktivierung der Mikroorganismen sicherzustellen, werden Fermentationsaktivator und Mikroorganismen vorteilhafterweise zu etwa gleichen Teilen der wässrigen Lösung beigemengt. Ein geeigneter Fermentationsaktivator ist zum Beispiel Zuckerrohrmelasse. Gemäß einer bevorzugten Zusammensetzung werden 1 l Fermentationsaktivator und 1 l Mikroorganismen, welche beispielsweise unter der Bezeichnung EM 1 von der Firma EMIKO Handelsgesellschaft mbH vertrieben werden, in 20l Wasser mit einer Temperatur zwischen 30 °C und 40 °C gelöst.

Zur Stabilisierung der Aktivierung und des sich anschließenden Fermentationsprozesses kann der wässrigen Lösung Keramikpulver beigemischt werden. Das Keramikpulver dient dann als Trägermaterial für die aktivierten Mikroorganismen und erhöht deren Aktivität in der Fermentation. Vorzugsweise wird das Keramikpulver der wässrigen Lösung in einer Menge beigefügt, die gleich der Menge Mikroorganismen oder der Menge Fermentationsaktivator ist.

Ein weiterer, die Fermentation stabilisierender Zusatzstoff kann Zeolithpulver sein. Das Zeolithpulver weist ebenso wie pyrogener Kohlenstoff, welcher auch als Pyrolysekohle oder Pflanzenkohle bezeichnet wird, eine große spezifische Oberfläche auf und dient der Strukturverbesserung des Bodensubstrats auch nach der Fermentation. Zeolithpulver kann dabei zumindest teilweise auch pyrogenen Kohlenstoff während der Fermentation ersetzen.

Gemäß einer vorteilhaften Ausgestaltung wird das vermahlene Gemisch mit wenigstens einem der nachfolgend aufgeführten Zusatzstoffe Lava, Mykorrhiza, effektiven Mikroorganismen, roter Kleeblütenextrakt, Huminsäure oder Chlorella-Algen vermengt. Die Anzahl und Menge der zugesetzten Zusatzstoffe ist dabei abhängig von einer späteren Verwendung des Bodensubstrats, so dass die Zusammensetzung des Bodensubstrats schwanken kann. Auch können unterschiedliche Baumarten unterschiedliche Zusammensetzungen des Bodensubstrats erfordern.

Wesentliche Unterschiede zwischen den Zusatzstoffen bestehen in deren Funktion in dem Bodensubstrat. So werden Mykorrhiza-Pilze, effektive Mikroorganismen oder Chlorella-Algen zugesetzt, um die schon zu der Fermentation zugegebenen lebenden Mikroorganismen zu ergänzen. Die Zugabe von Mykorrhiza-Pilzen ist beispielsweise vor allem bei der Behandlung von Laubbäumen ein wichtiger Zusatzstoff, dessen Anteil im Bodensubstrat vorteilhafterweise 1 % beträgt. Die Chlorella-Algen dienen zudem auch als Quelle für Spurenelemente.

Als Nährstoffquelle können zudem roter Kleeblütenextrakt und Huminsäure beigegeben werden. Gemäß einer bevorzugten Zusammensetzung des Bodensubstrats betragen die Anteile von rotem Kleeblütenextrakt, Huminsäure oder Chlorella-Algen ebenfalls jeweils bis zu 1 %. Gesteinsmehl und Lava werden vor allem zur Strukturverbesserung und als Nährstoffquelle für Mineralien zugegeben. Der Anteil Gesteinsmehl oder Lava kann bis zu 10 % betragen.

Wesentliches Merkmal aller Bestandteile des Bodensubstrats ist, dass diese natürlichen Ursprungs sind und ansonsten zu entsorgende Biomasse mittels umweltfreundlicher Technik sinnvoll zu Bodensubstrat aufgearbeitet und als wertvolles Produkt wiederverwendbar ist.

Weiter betrifft die Erfindung auch ein Verfahren zum Einbringen des Bodensubstrats in einen Boden, das sich dadurch auszeichnet, dass eine Injektionslanze handgeführt in einen von einem zu behandelnden Baum bewurzelten Bereich des Bodens entsprechend seiner Kronentraufe eingedrückt wird, dass der Boden durch Bewegen der Injektionslanze schichtweise aufgelockert wird, und dass das Bodensubstrat pneumatisch in den Boden eingebracht wird.

Das Einbringen des Bodensubstrats mittels der Injektionslanze ist ein minimaler Eingriff in den Boden, wobei trotzdem eine Auflockerung des Bodens erfolgen kann. Indem die Injektionslanze von Hand geführt wird, ist zudem ein effektiver Schutz von Wurzeln eines Baumes erreicht. Eine die Injektionslanze führende Person kann die Wurzeln anhand des Widerstandes fühlen und so den Druck auf die Wurzel mindern bzw. die Richtung in die die Injektionslanze in den Boden eingedrückt wird ändern.

Das Aufbrechen und Lockern des Bodens kann dabei schichtweise von einer oberen Bodenschicht bis zu einer in Abhängigkeit von der Länge der Injektionslanze tiefsten Bodenschicht durchgeführt werden. Die Injektionslanze wird dazu in jeder zu lockernder Bodenschicht entsprechend bewegt. Während die Injektionslanze im Boden hin und her bewegt wird, wird vorteilhafterweise gleichzeitig mittels Druckluft das Bodensubstrat in die vorgesehenen Bodenschichten eingebracht und verteilt. Die Auflockerung des Bodens und das Einbringen von Bodensubstrat in den Boden können so auch nur in bestimmten Schichten des Bodens erfolgen.

Um das Bodensubstrat einerseits gut zu verteilen und andererseits nicht unnötig Stress für den zu behandelnden Baum auszulösen, ist nach einer Weiterbildung vorgesehen, dass für eine Fläche zwischen 2 m² und 4 m², insbesondere eine Fläche von ca. 3 m², eine Injektion mit der Injektionslanze durchgeführt wird. Dies ist ausreichend, um genügend Bodensubstrat in der Fläche zu verteilen und eine Verbesserung des Bodenklimas bzw. der Bodenaktivität sicherzustellen. Die Menge an Bodensubstrat, die mit einer Injektion in den Bereich der Kronentraufe des Baumes eingearbeitet wird beträgt vorteilhafterweise zwischen 2 l und 4 l.

Für schwer geschädigte Bäume bzw. an besonders ungünstigen Standorten kann zudem eine mehrfache Behandlung der Bäume notwendig sein. Nach einer Weiterbildung ist daher vorgesehen, dass das Einbringen des Bodensubstrats in Abhängigkeit von einer Schädigung eines Baumes wenigstens einmal wiederholt wird. Indem mehrfach Bodensubstrat eingebracht wird, kann eine dauerhafte Stabilisierung des Bodenklimas dabei eher erreicht werden, als wenn eine größere Menge auf einmal in den Boden eingebracht wird.

## Patentansprüche

1. Verfahren zur Herstellung eines Bodensubstrats zur Düngung und Bodenverbesserung, insbesondere im Wurzelbereich von Bäumen,
bei dem in einer wässrigen Lösung unter Zugabe eines Fermentationsaktivators lebende Mikroorganismen aktiviert werden,
bei dem die wässrige Lösung mit den aktivierten Mikroorganismen, leicht zersetzbare organische Biomasse und zerkleinerter pyrogener Kohlenstoff zu einem Gemisch vermischt werden, und
bei dem sich an das Vermischen eine Fermentation des Gemisches anschließt, wobei das Gemisch für wenigstens einen Tag eine Temperatur von mehr als 60 °C aufweist,
**dadurch gekennzeichnet,**
**dass** das Gemisch im Anschluss an die Fermentation schonend bei Temperaturen zwischen 40 °C und 50 °C getrocknet wird,
**dass** das Gemisch so lange getrocknet wird, bis dieses einen Trockenmassegehalt von wenigstens 90 %, insbesondere wenigstens 95 %, aufweist, und
**dass** das getrocknete Gemisch vermahlen wird, bis dieses eine Korngröße von weniger als 0,2 mm aufweist.

2. Verfahren nach Anspruch 1, **dadurch gekennzeichnet, dass** das Gemisch über einen Zeitraum von wenigstens vier Wochen getrocknet wird.

3. Verfahren nach einem der Ansprüche 1 oder 2, **dadurch gekennzeichnet, dass** das Gemisch während des Trocknens wenigstens einmal pro Woche durchmischt wird.

4. Verfahren nach einem der Ansprüche 1 bis 3, **dadurch gekennzeichnet, dass** das fertig fermentierte Gemisch vor dem Trocknen granuliert wird.

5. Verfahren nach einem der Ansprüche 1 bis 4, **dadurch gekennzeichnet, dass** das Gemisch während der Fermentation für einen Zeitraum von fünf bis zehn Tagen eine Temperatur von mehr als 60 °C aufweist.

6. Verfahren nach einem der Ansprüche 1 bis 5, **dadurch gekennzeichnet, dass** das Gemisch für die Dauer der Fermentation zu einer Miete aufgeschichtet wird und die Miete mit einer Folie abgedeckt wird.

7. Verfahren nach einem der Ansprüche 1 bis 6, **dadurch gekennzeichnet, dass** die Mikroorganismen für wenigstens sieben Tage in der wässrigen Lösung aktiviert werden, bevor die wässrige Lösung mit der leicht zersetzbaren organischen Biomasse und dem zerkleinerten pyrogenen Kohlenstoff vermischt wird.

8. Verfahren nach einem der Ansprüche 1 bis 7, **dadurch gekennzeichnet, dass** Fermentationsaktivator und Mikroorganismen zu etwa gleichen Teilen der wässrigen Lösung beigemengt werden.

9. Verfahren nach einem der Ansprüche 1 bis 8, **dadurch gekennzeichnet, dass** der wässrigen Lösung Keramikpulver beigemischt wird.

10. Verfahren nach einem der Ansprüche 1 bis 9, **dadurch gekennzeichnet, dass** das vermahlene Gemisch mit wenigstens einem der nachfolgend aufgeführten Zusatzstoffe Lava, Mykorrhiza, effektiven Mikroorganismen, roter Kleeblütenextrakt, Huminsäure oder Chlorella-Algen vermengt wird.

11. Verfahren zum Einbringen des nach einem der Ansprüche 1 bis 10 hergestellten Bodensubstrats in einen Boden,
**dadurch gekennzeichnet,**
**dass** eine Injektionslanze handgeführt in einen von einem zu behandelnden Baum bewurzelten Bereich des Bodens entsprechend seiner Kronentraufe eingedrückt wird,
**dass** der Boden durch Bewegen der Injektionslanze schichtweise aufgelockert wird, und
**dass** das Bodensubstrat pneumatisch in den Boden eingebracht wird.

12. Verfahren nach Anspruch 11, **dadurch gekennzeichnet, dass** für eine Fläche zwischen 2 m² und 4 m², insbesondere eine Fläche von ca. 3 m², eine Injektion mit der Injektionslanze durchgeführt wird, und dass mit einer Injektion zwischen 2 l und 4 l des Bodensubstrats nach Anspruch 1 oder 2 in den Bereich der Kronentraufe des Baumes eingearbeitet werden.

13. Verfahren nach einem der Ansprüche 11 oder 12, **dadurch gekennzeichnet, dass** das Einbringen des Bodensubstrats in Abhängigkeit von einer Schädigung eines Baumes wenigstens einmal wiederholt wird.

## Claims

1. Method for manufacturing a soil substrate for fertilization and soil improvement, in particular in the root area of trees, in which living microorganisms in an aqueous solution are activated by adding a fermentation activator,
in which the aqueous solution with the activated microorganisms, easily decomposable organic biomass, and crushed pyrogenic carbon are mixed to form a mixture, and
in which the mixing is followed by fermentation of the mixture, wherein the mixture has a temperature of more than 60 °C for at least one day,
**characterized in that**,
following the fermentation, the mixture is gently dried at temperatures between 40 °C and 50 °C,
the mixture is dried until it has a dry matter content of at least 90 %, in particular at least 95 %, and
the dried mixture is ground until it has a grain size of less than 0.2 mm.

2. Method according to claim 1, **characterized in that** the mixture is dried over a period of at least four weeks.

3. Method according to one of claims 1 or 2, **characterized in that** the mixture is thoroughly mixed at least once per week during the drying.

4. Method according to one of claims 1 to 3, **characterized in that** the fully fermented mixture is granulated prior to drying.

5. Method according to one of claims 1 to 4, **characterized in that** the mixture has a temperature of more than 60 °C for a period of five to ten days during the fermentation.

6. Method according to one of claims 1 to 5, **characterized in that** the mixture is piled up into a stack for the duration of the fermentation and that the stack is covered with a film.

7. Method according to one of claims 1 to 6, **characterized in that** the microorganisms are activated for at least seven days in the aqueous solution before the aqueous solution is mixed with the easily decomposable organic biomass and the crushed pyrogenic carbon.

8. Method according to one of claims 1 to 7, **characterized in that** the fermentation activator and the microorganisms are admixed to the aqueous solution in approximately equal parts.

9. Method according to one of claims 1 to 8, **characterized in that** ceramic powder is mixed into the aqueous solution.

10. Method according to one of claims 1 to 9, **characterized in that** the ground mixture is mixed with at least one of the subsequently listed additives: lava, mycorrhiza, effective microorganisms, red clover blossom extract, humic acid, or Chlorella algae.

11. Method for introducing the soil substrate, manufactured according to one of claims 1 to 10, into a soil,
**characterized in that**
a hand-held injection lance is pressed into a rooted area of the soil of a tree to be treated corresponding to its drip line,
the soil is loosened up in layers by moving the injection lance, and
the soil substrate is pneumatically introduced into the soil.

12. Method according to claim 11, **characterized in that** an injection is carried out with the injection lance for an area between 2 m² and 4 m², in particular an area of approximately 3 m², and that an injection of between 2 1 and 4 1 of the soil substrate according to claim 1 or 2 is incorporated into the area of the drip line of the tree.

13. Method according to one of claims 11 or 12, **characterized in that** the introduction of the soil substrate is repeated at least one time on the basis of damage to a tree.

## Revendications

1. Procédé de fabrication d'un substrat de sols pour la fertilisation et l'amendement de sol, en particulier dans la zone racinaire des arbres,
pour lequel des microorganismes vivants sont activés dans une solution aqueuse par addition d'un activateur de fermentation,
pour lequel la solution aqueuse est mélangée en un mélange avec des microorganismes activés, une biomasse organique légèrement décomposable et du carbone pyrogène broyé, et
pour lequel le mélange est suivi d'une fermentation du mélange, sachant que le mélange comporte une température de plus de 60 °C pour au moins un jour,
**caractérisé en ce que**
le mélange est séché avec ménagement à la suite de la fermentation à des températures se situant entre 40 °C et 50 °C,
**en ce que** le mélange est séché jusqu'à ce que celui-ci comporte une teneur en masse sèche d'au moins 90 %, en particulier d'au moins 95 %, et
**en ce que** le mélange séché est moulu jusqu'à ce que celui-ci comporte une granulométrie inférieure à 0,2 mm.

2. Procédé selon la revendication 1, **caractérisé en ce que** le mélange est séché sur une période d'au moins quatre semaines.

3. Procédé selon l'une quelconque des revendications 1 ou 2, **caractérisé en ce que** le mélange est brassé au moins une fois par semaine pendant le séchage.

4. Procédé selon l'une quelconque des revendications 1 à 3, **caractérisé en ce que** le mélange définitivement fermenté est granulé avant séchage.

5. Procédé selon l'une quelconque des revendications 1 à 4, **caractérisé en ce que** le mélange comporte une température de plus de 60 °C pendant la fermentation pour une durée de cinq à dix jours.

6. Procédé selon l'une quelconque des revendications 1 à 5, **caractérisé en ce que** le mélange pour la durée de la fermentation est entassé en un tas et le tas est recouvert d'une feuille.

7. Procédé selon l'une quelconque des revendications 1 à 6, **caractérisé en ce que** les microorganismes sont activés pour au moins sept jours dans la solution aqueuse avant que la solution aqueuse soit mélangée avec la biomasse organique légèrement décomposable et le carbone pyrogène broyé.

8. Procédé selon l'une quelconque des revendications 1 à 7, **caractérisé en ce que** l'activateur de fermentation et les microorganismes sont mélangés aux proportions à peu près identiques de la solution aqueuse.

9. Procédé selon l'une quelconque des revendications 1 à 8, **caractérisé en ce que** la solution aqueuse est additionnée de poudre céramique.

10. Procédé selon l'une quelconque des revendications 1 à 9, **caractérisé en ce que** le mélange moulu est augmenté par mélange au moins avec un des additifs indiqués ci-après : lave, mycorhize, microorganismes efficaces, extrait rouge floral de trèfle, acide humique ou algues chorelles.

11. Procédé de mise en œuvre du substrat de sols dans un sol fabriqué selon l'une quelconque des revendications 1 à 10 selon, **caractérisé en ce qu'une** lance d'injection manuellement guidée est enfoncée dans une zone enracinée du sol d'un arbre à traiter correspondant à sa périphérie d'égouttement de la couronne,
**en ce que** le sol est ameubli en déplaçant par couche la lance d'injection, et
**en ce que** le substrat de sols est pneumatiquement mis en œuvre dans le sol.

12. Procédé selon la revendication 11, **caractérisé en ce qu'**une injection avec la lance d'injection est effectuée pour une surface se situant entre 2 m² et 4 m² en particulier une surface d'env. 3 m² et **en ce qu'**entre 2 1 et 4 1 du substrat de sols sont introduits selon la revendication 1 ou 2 avec une injection dans la zone de la périphérie d'égouttement de la couronne de l'arbre.

13. Procédé selon l'une quelconque des revendications 11 ou 12, **caractérisé en ce que** la mise en œuvre du substrat de sols est répétée au moins une fois en fonction d'un endommagement d'un arbre.
